# EUROPEAN PATENT APPLICATION

(11) **EP 4 723 498 A1**
(43) Date of publication of application: **08.04.2026**
(21) Application number: 24306629.7
(22) Date of filing: 04.10.2024
(51) Int. Cl.: H04B 5/48

(54) **AN ANTENNA ARRANGEMENT**

(71) Applicant: NXP B.V., 5656 AG Eindhoven (NL)
(72) Inventor: MERLIN,, Erich, 5656 AG Eindhoven (NL); KURVATHODIL,, Manoj, 5656 AG Eindhoven (NL); MAURICE,, Eric, 31023 Toulouse (FR); MOREAU,, Olivier Claude, 31023 Toulouse (FR)
(74) Representative: Krott, Michel

(57) **Abstract**

An antenna arrangement comprising: a first antenna; a second antenna; a first transmitter path coupled to the first antenna comprising a first matching circuit, the first matching circuit comprising a first serial capacitor divider arranged in series with the first antenna; a second transmitter path coupled to the second antenna comprising a second matching circuit comprising a second serial capacitor divider arranged in series with the second antenna; a first receiver path coupled to the first transmitter path at a first tapping point between capacitors of the first serial capacitor divider; a second receiver path coupled to the second transmitter path at a second tapping point between capacitors of the second serial capacitor divider; and a second node of the first antenna is coupled to the reference voltage node; and a second node of the second antenna is coupled to the reference voltage node.

## Description

### Field

The present disclosure relates to an antenna arrangement and an NFC device. In particular, the present disclosure relates to an antenna arrangement comprising first and second antennas each configured to receive and transmit near field communication signals and an NFC device comprising such an antenna arrangement.

### Summary

According to a first aspect of the present disclosure, there is provided an antenna arrangement comprising: a first antenna configured to receive and transmit a first set of near field communication signals; a second antenna configured to receive and transmit a second set of near field communication signals; a first transmitter path coupled to the first antenna wherein the first transmitter path comprises a first matching circuit and wherein the first matching circuit comprises a first serial capacitor divider arranged in series with the first antenna, wherein the first antenna is coupled in series between the first matching circuit and a reference voltage node; a second transmitter path coupled to the second antenna wherein the second transmitter path comprises a second matching circuit and wherein the second matching circuit comprises a second serial capacitor divider arranged in series with the second antenna, wherein the second antenna is coupled in series between the second matching circuit and the reference voltage node; a first receiver path coupled to the first transmitter path at a first tapping point wherein the first tapping point is arranged between capacitors of the first serial capacitor divider; a second receiver path coupled to the second transmitter path at a second tapping point wherein the second tapping point is arranged between capacitors of the second serial capacitor divider; and wherein a first node of the first antenna is coupled to an output of the first matching circuit and a second node of the first antenna is coupled to the reference voltage node; and wherein a first node of the second antenna is coupled to an output of the second matching circuit and a second node of the second antenna is coupled to the reference voltage node.

In one or more embodiments, the first matching circuit may comprise a first grounding capacitor comprising a first node coupled to the first transmitter path and a second node coupled to the reference voltage node; and the second matching circuit may comprise a second grounding capacitor comprising a first node coupled to the second transmitter path and a second node coupled to the reference voltage node.

In one or more embodiments, the first transmitter path may further comprise a first EMC filter arranged between a first end of the first transmitter path and the first matching circuit wherein the first end of the first transmitter path is opposite a second end of the first transmitter path and wherein the first antenna is arranged at the second end of the first transmitter path; and the second transmitter path may further comprise a second EMC filter arranged between a first end of the second transmitter path and the second matching circuit wherein the first end of the second transmitter path is opposite a second end of the second transmitter path and wherein the second antenna is arranged at the second end of the second transmitter path.

In one or more embodiments, the first EMC filter may comprise a first EMC filter capacitor comprising a first node coupled to the first transmitter path and a second node coupled to a reference voltage node; and the second EMC filter may comprise a second EMC filter capacitor comprising a first node coupled to the second transmitter path and a second node coupled to the reference voltage node.

In one or more embodiments, the antenna arrangement may further comprise a voltage sensor configured to measure a voltage at the first antenna.

In one or more embodiments, the voltage sensor may be an analogue input of a microprocessor configured to measure the voltage at the first antenna.

According to a second aspect of the present disclosure, there is provided a Near Field Communications (NFC) device comprising the antenna arrangement of the first aspect.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example embodiment of an antenna arrangement of the present disclosure;
Figure 2 shows an alternative example embodiment of the antenna arrangement of the present disclosure further comprising a voltage sensor; and
Figure 3 shows an example NFC device comprising an antenna arrangement.

### Detailed Description

The present disclosure relates to an antenna arrangement for a Near-Field Communications device (NFC device). NFC is a short-range wireless technology that allows NFC-enabled devices to communicate with each other. Such devices may include mobile phones, tablets, laptops, wearables and other devices. NFC technology can be used for contactless payments, data sharing, mobile ticketing and access control, among other uses.

Given the wide range of applications that NFC is being put to in modern society, it is becoming increasingly desirable for an NFC-enabled device to be able to perform multiple functionalities sequentially or simultaneously. Practically, this requires the implementation of multiple antennas which are each configured to receive and transmit NFC signals. The present disclosure provides front-end topologies with antennas connected with corresponding topologies to a common reference voltage node (such as a ground node). The topologies of the present disclosure may provide for improved phase and amplitude balance management.

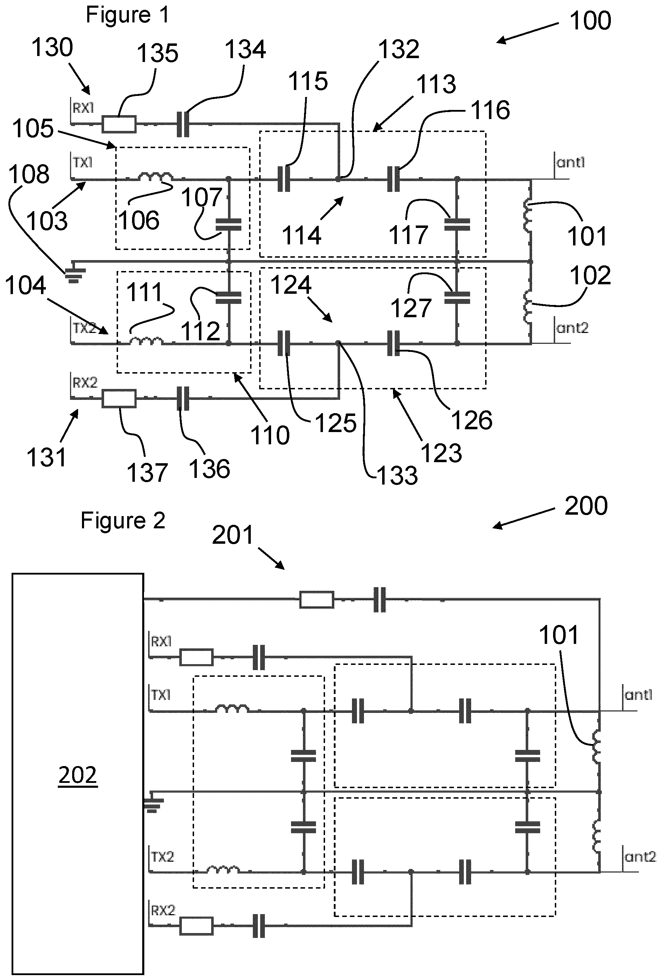

Figure 1 shows an example antenna arrangement 100 according to the present disclosure. The antenna arrangement 100 comprises first and second antennas 101, 102 and the supporting electronics that support the receipt and transmission of near field communication (NFC) signals.

The antenna arrangement 100 comprises a first antenna 101 which is configured to receive and transmit a first set of near field communication signals. The first antenna 101 is represented in figure 1 by inductor 101. The configuration of the first antenna 101 to receive and transmit the near field communication signals includes properties such as its size, conductivity and other electrical or physical properties which allow it to operate as an antenna at a desired frequency or frequencies. For example, a typical operating frequency for NFC may be approximately 13.56 MHz, however, this is not the only frequency which may be selected.

The antenna arrangement 100 further comprises a second antenna 102 which is configured to receive and transmit a second set of near field communication signals. The second antenna 102 is represented in figure 1 by inductor 102. The configuration of the second antenna 102 to provide for the receipt and transmission of NFC signals may include the configuration of the size, conductivity and other electrical or physical properties which allow it to operate as an antenna at a desired frequency or frequencies.

The antenna arrangement 100 further comprises a first transmitter path 103 and a second transmitter path 104. The transmitter paths 103, 104 comprise electronics which may couple their respective antenna 101, 102 to a transmitter device (not shown) where the transmitter device is configured to generate signals for transmission or may be configured to be coupled to a transmitter device configured to generate signals for transmission. That is, it will be appreciated that the antenna arrangement does not necessarily need to be coupled to a transmitter device (or, as will be discussed later, a receiver device) in order to provide all of the features that are core to the present disclosure, as defined in the claims. As a result of this, neither the transmitter device nor the receiver device which could provide for the transmission of signals, or which may process the received signals, respectively, will not be discussed in detail herein. In general, the transmitter device and receiver device may be implemented as an NFC integrated circuit which is configured to generate outgoing signals and process incoming signals. It will be appreciated that alternative implementations may also be used.

The first transmitter path 103 may comprise a first EMC filter 105. The first EMC filter 105 may provide for attenuation of undesirable electromagnetic interference, such as harmonics of the signal for transmission. That is, the first EMC filter 105 may improve the robustness of the antenna arrangement 100 to internally generated or external electromagnetic signals at frequencies which the first EMC filter 105 is configured to attenuate. The first EMC filter 105 may, therefore, allow the antenna arrangement 100 to operate reliably.

The first EMC filter may comprise a first EMC filter inductor 106 arranged in series between a first end of the first transmitter path 103 and the first matching circuit 113, where the first end of the first transmitter path 103 may be configured to receive a transmission signal for transmission by the first antenna 101. That is, a first node of the first EMC filter inductor 106 may be coupled to a first node (first end) of the first transmitter path. A second node of the first EMC filter inductor 106 may be coupled to a first node of a first matching circuit, described below. The second node of the first EMC filter inductor 106 may further be coupled to a first node of a first EMC filter capacitor 107. The first EMC filter capacitor 106 may be coupled to a reference voltage node 108, such as a ground node. More specifically, a second node of the first EMC filter capacitor 107 may be coupled to a reference voltage node 108, such as a ground node.

The second EMC filter 110 may comprise a second EMC filter inductor 111 arranged in series between a first end of the second transmitter path 104 and the second matching circuit, where the first end of the second transmitter path 104 may be configured to receive a transmission signal for transmission by the second antenna 102, and an output of the EMC filter 110. That is, a first node of the second EMC filter inductor 111 may be coupled to a first node of the second transmitter path 104. A second node of the second EMC filter inductor 111 may be coupled to a first node of a second matching circuit, described below. The second node of the second EMC filter inductor 111 may further be coupled to a first node of a second EMC filter capacitor 112. The second EMC filter capacitor 112 may be coupled to a reference voltage node 108, such as a ground node, which may be the reference voltage node. More specifically, a second node of the second EMC filter capacitor 112 may be coupled to a reference voltage node 108, such as a ground node. That is, the first and second EMC filter capacitors 107, 112 may be arranged in series between the first transmitter path 103 and the second transmitter path 104 and the first and second EMC filter capacitors 107, 112 may further comprise an intermediate reference voltage node 108 therebetween.

Any reference voltage node referred to herein may comprise a ground node set to a relative 0 volts or may refer to a node which is configured, in use, to be coupled to a ground node set to a relative 0 volts. This reference voltage nodes referred to herein may be reference voltage nodes which are couplable to ground. Any reference node may be set to a same relative voltage as one or more of the other reference nodes, or one or more reference nodes may be set to different reference voltages, as is appropriate to enable operation of the antenna arrangement in the described manner. It will further be appreciated that, typically, reference nodes, such as a ground node, are only considered coupled to ground when the arrangement is coupled to a power source. As such, references to nodes or terminals being couplable to ground are understood by the skilled person as being a clear reference that such an amplifier circuit does not need to be coupled to a power source to be an amplifier circuit according to the present disclosure but is configured to be so coupled in use.

The first transmitter path 103 may further comprise a first matching circuit 113. The first matching circuit 113, which may be a first impedance matching circuit, may be configured to provide for one or both of compensation for the inductive impedance of the first antenna 101; and to implement an impedance transformation from a load impedance to a source impedance.

The first matching circuit 113 comprises a first serial capacitor divider 114 arranged in series with the first EMC filter 105 and the first antenna 101. In particular, the first serial capacitor divider may be arranged in series between the first EMC filter 105 and the first antenna 101. The first serial capacitor divider 114 may be a serial capacitor voltage divider comprised of a first serial capacitor 115 and a second serial capacitor 116 wherein the first serial capacitor 115 is configured to receive a signal from the first EMC filter 105 at a first node. A second node of the first serial capacitor 115 may be coupled to a first node of the second serial capacitor 116 of the first serial capacitor divider 113. The second node of the second serial capacitor 116 may be coupled to a first node of the first antenna 101. The first matching circuit 113 may further comprise a first grounding capacitor 117 coupled between the second node of the second serial capacitor 116 and a reference voltage node 108, which may be a ground node.

The second matching circuit 123 comprises a second serial capacitor divider 124 arranged in series with the second EMC filter 110 and the second antenna 102. In particular, the second serial capacitor divider 124 may be arranged in series between the second EMC filter 104 and the second antenna 102. The second serial capacitor divider 124 may be a serial capacitor voltage divider comprised of a first serial capacitor 125 and a second serial capacitor 126 wherein the first serial capacitor 125 is configured to receive a signal from the second EMC filter 110 at a first node. A second node of the first serial capacitor 125 may be coupled to a first node of the second serial capacitor 126 of the second serial capacitor divider 123. The second node of the second serial capacitor 126 may be coupled to a first node of the second antenna 102. The second matching circuit 123 may further comprise a second grounding capacitor 127 coupled between the second node of the second serial capacitor 126 and a reference voltage node 108, which may be a ground node. That is, the first and second grounding capacitors 117, 127 of the first and second matching circuits 113, 123 may be arranged in series between the first transmitter path 103 and the second transmitter path 104 and the first and second grounding capacitors 117, 127 may further comprise an intermediate reference voltage node 108 coupled therebetween.

The first antenna 101 may be coupled to an output node of the first matching circuit 113. In particular, a first node of the first antenna 101 may be coupled to an output node of the first matching circuit 113 and a second node of the first antenna 101 may be coupled to a reference voltage node 108, such as the ground node. Similarly, the second antenna 102 may be coupled to an output node of the second matching circuit 123. In particular, a first node of the second antenna 102 may be coupled to an output node of the second matching circuit 123 and a second node of the second antenna 102 may be coupled to a reference voltage node 108, such as a ground node. The first and second antennas 101, 102 may be arranged in series between the first transmitter path 103 and the second transmitter path 104 and the first and second antennas 101, 102 comprises an intermediate reference voltage node 108 coupled therebetween.

The antenna arrangement 100 further comprises first and second receiver paths 130, 131 which are coupled to their respective transmitter paths 103, 104 at a first tapping point 132 and a second tapping point 133, respectively. While the whole length of conductor between TX1 and the first antenna is referred to herein as the first transmitter path 103, it will be appreciated that this is done for ease of reference. It will be understood that received signals will still travel at least the part of the "first transmitter path 103" (as referred to herein) between the first antenna and the first tapping point 132. Indeed, the received signals may also travel through other parts of the antenna arrangement 100, however, the signals of interest for the receiver path 130 are those which will travel from the first antenna 101 to the first tapping point 132 and from the first tapping point 132 to the first end of the receiver path 130 which may be coupled or couplable to a receiver device. The same description may be equally applied to the path travelled by signals received at the second antenna 102 which travel along at least part of the first transmitter path 104.

The first receiver path may comprise a first receiver path capacitor 134 and a first receiver path resistor 135 wherein the first receiver path capacitor 134 and the first receiver path resistor 135 are coupled in series between a first end (first node) of the first receiver path 130 and the first tapping point 132. The first tapping point 132 is arranged between the capacitors 115, 116 of the first serial capacitor divider 114. That is, the first tapping point 132 is arranged between the first serial capacitor 115 and the second serial capacitor 116 of the first matching circuit 113.

The second receiver path 131 may comprise a second receiver path capacitor 136 and a second receiver path resistor 137 wherein the second receiver path capacitor 136 and the second receiver path resistor 137 are coupled in series between a first end (first node) of the second receiver path 131 and the second tapping point 133. The second tapping point 133 is arranged between the capacitors 125, 126 of the second serial capacitor divider 124. That is, the second tapping point 133 is arranged between the first serial capacitor 125 and the second serial capacitor 126 of the second matching circuit 124.

The topologies described herein may provide for the maintenance of a phase difference of approximately 180° between a first receiver path and a second receiver path. Providing the tapping points between the capacitors of a serial capacitor divider provides a balancing effect which allows these phase differences to be maintained with or without detuning due to the presence of a card near an antenna.

Figure 2 shows an example antenna arrangement 200 according to the present disclosure and described with reference to figure 1. The antenna arrangement 200 depicted in figure 2 further comprises a signal sensor 201 configured to measure a signal at the first antenna 101. The signal sensor 201 may be any suitable signal sensor 201 configured to measure a signal over the first antenna 101. In one or more embodiments, the signal sensor 201 may comprise a connection of a first node of the first antenna 101 to an analogue input of an integrated circuit 202 and wherein the integrated circuit 202 is configured to measure a signal or electrical property at the first antenna 101. Thus, the signal sensor 201 may be configured to provide signalling to an integrated circuit 202 indicative of a signal at the first antenna 101. Based on the signalling, the integrated circuit 202 may be configured to determine which of the antennas 101, 102 is currently in operation. Being able to determine the signal over one of the two antennas 101, 102 may be particularly beneficial because, under normal operation, it may not be possible to determine which of the antennas 101, 102 is receiving a signal (has been triggered by placement). By providing for a signal measurement at one of the antennas 101, it is possible to distinguish which of the antennas 101, 102 has been activated.

In one or more embodiments, the signal sensor 201 may be a volage sensor 201 configured to measure a voltage over the first antenna 101. The voltage sensor 201 may be configured to provide signalling to the integrated circuit 202 indicative of a voltage at the first antenna 101. Based on the signalling, the integrated circuit 202 may be configured to determine which of the antennas 101, 102 is currently in operation. It will be appreciated that the signal sensor may be a different type of signal sensor, such as a current sensor or another sensor which measures an electrical property over the first antenna.

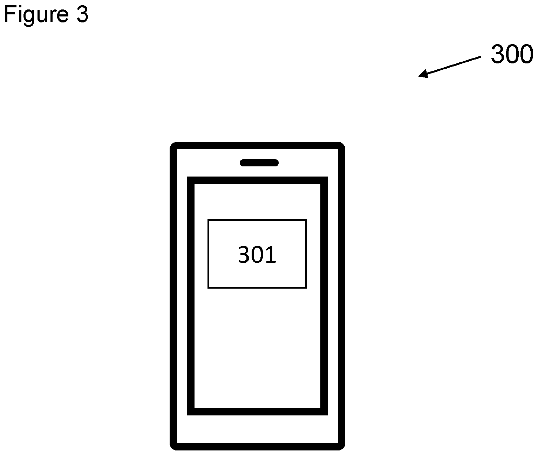

Figure 3 shows an example Near Field Communication (NFC) device 300 comprising the antenna arrangement 301, such as the antenna arrangement 301 of figure 1 or figure 2. The NFC device 300 may be any device in which it may be desirable to have two antennas. For example, the NFC device 300 may be a mobile phone, a tablet device, a smart watch, a payment terminal, an access control system, smart-jewellery, wireless earbuds or headphones, a gaming console, a medical device or a type of apparel.

It will be appreciated by a person skilled in the art that configuring the various components of the antenna arrangement to operate within certain frequency/time/impedance regimes may involve scaling the magnitudes of said components to suitable sizes, inductances, capacitances, resistances and other electrical characteristics to operate within the desired regime. It will be appreciated by a skilled person that just because components of another circuit may be connected in similar arrangements, if they are configured for operation of different technical uses, then they may not necessarily provide for the same technical effect as the circuits disclosed herein.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. An antenna arrangement comprising:
a first antenna configured to receive and transmit a first set of near field communication signals;
a second antenna configured to receive and transmit a second set of near field communication signals;
a first transmitter path coupled to the first antenna wherein the first transmitter path comprises a first matching circuit and wherein the first matching circuit comprises a first serial capacitor divider arranged in series with the first antenna, wherein the first antenna is coupled in series between the first matching circuit and a reference voltage node;
a second transmitter path coupled to the second antenna wherein the second transmitter path comprises a second matching circuit and wherein the second matching circuit comprises a second serial capacitor divider arranged in series with the second antenna, wherein the second antenna is coupled in series between the second matching circuit and the reference voltage node;
a first receiver path coupled to the first transmitter path at a first tapping point wherein the first tapping point is arranged between capacitors of the first serial capacitor divider;
a second receiver path coupled to the second transmitter path at a second tapping point wherein the second tapping point is arranged between capacitors of the second serial capacitor divider; and
wherein a first node of the first antenna is coupled to an output of the first matching circuit and a second node of the first antenna is coupled to the reference voltage node; and wherein a first node of the second antenna is coupled to an output of the second matching circuit and a second node of the second antenna is coupled to the reference voltage node.

2. The antenna arrangement of claim 1 wherein:
the first matching circuit comprises a first grounding capacitor comprising a first node coupled to the first transmitter path and a second node coupled to the reference voltage node; and
the second matching circuit comprises a second grounding capacitor comprising a first node coupled to the second transmitter path and a second node coupled to the reference voltage node.

3. The first antenna arrangement of any preceding claim wherein:
the first transmitter path further comprises a first EMC filter arranged between a first end of the first transmitter path and the first matching circuit wherein the first end of the first transmitter path is opposite a second end of the first transmitter path and wherein the first antenna is arranged at the second end of the first transmitter path; and
the second transmitter path further comprises a second EMC filter arranged between a first end of the second transmitter path and the second matching circuit wherein the first end of the second transmitter path is opposite a second end of the second transmitter path and wherein the second antenna is arranged at the second end of the second transmitter path.

4. The antenna arrangement of claim 3 wherein:
the first EMC filter comprises a first EMC filter capacitor comprising a first node coupled to the first transmitter path and a second node coupled to a reference voltage node; and
wherein the second EMC filter comprises a second EMC filter capacitor comprising a first node coupled to the second transmitter path and a second node coupled to the reference voltage node.

5. The antenna arrangement of any preceding claim further comprising a signal sensor configured to measure a signal at the first antenna.

6. The antenna arrangement of claim 5 wherein the signal sensor is an analogue input of a microprocessor configured to measure the signal at the first antenna.

7. A Near Field Communications (NFC) device comprising the antenna arrangement of any preceding claim.

## Amended claims

### Amended claims in accordance with Rule 137(2) EPC.

1. An antenna arrangement (100) comprising:
a first antenna (101) configured to receive and transmit a first set of near field communication signals;
a second antenna (102) configured to receive and transmit a second set of near field communication signals;
a first transmitter path (103) coupled to the first antenna wherein the first transmitter path (103) comprises a first matching circuit (113) and wherein the first matching circuit (113) comprises a first serial capacitor voltage divider (114) arranged in series with the first antenna (101), wherein the first antenna (101) is coupled in series between the first matching circuit (113) and a reference voltage node (108);
a second transmitter path (104) coupled to the second antenna (102) wherein the second transmitter path (104) comprises a second matching circuit (123) and wherein the second matching circuit (123) comprises a second serial capacitor voltage divider (124) arranged in series with the second antenna (102), wherein the second antenna (102) is coupled in series between the second matching circuit (123) and the reference voltage node (108);
a first receiver path (130) coupled to the first transmitter path (103) at a first tapping point (132) wherein the first tapping point (132) is arranged between capacitors (115, 116) of the first serial capacitor voltage divider (114);
a second receiver path (131) coupled to the second transmitter path (104) at a second tapping point (133) wherein the second tapping point (133) is arranged between capacitors (125, 126) of the second serial capacitor voltage divider (124); and
wherein a first node of the first antenna (101) is coupled to an output of the first matching circuit (113) and a second node of the first antenna (101) is coupled to the reference voltage node (108); and wherein a first node of the second antenna (102) is coupled to an output of the second matching circuit (123) and a second node of the second antenna (102) is coupled to the reference voltage node (108).

2. The antenna arrangement (100) of claim 1 wherein:
the first matching circuit (113) comprises a first grounding capacitor (117) comprising a first node coupled to the first transmitter path (113) and a second node coupled to the reference voltage node (108); and
the second matching circuit (104) comprises a second grounding capacitor (127) comprising a first node coupled to the second transmitter path (104) and a second node coupled to the reference voltage node (108).

3. The antenna arrangement (100) of any preceding claim wherein:
the first transmitter path (103) further comprises a first EMC filter (105) arranged between a first end of the first transmitter path (103) and the first matching circuit (113) wherein the first end of the first transmitter path (103) is opposite a second end of the first transmitter path (103) and wherein the first antenna (101) is arranged at the second end of the first transmitter path (103); and
the second transmitter path (104) further comprises a second EMC filter (110) arranged between a first end of the second transmitter path (104) and the second matching circuit (123) wherein the first end of the second transmitter path (104) is opposite a second end of the second transmitter path (104) and wherein the second antenna (102) is arranged at the second end of the second transmitter path (104).

4. The antenna arrangement (100) of claim 3 wherein:
the first EMC filter (105) comprises a first EMC filter capacitor (107) comprising a first node coupled to the first transmitter path (103) and a second node coupled to a reference voltage node (108); and
wherein the second EMC filter (110) comprises a second EMC filter capacitor (112) comprising a first node coupled to the second transmitter path (104) and a second node coupled to the reference voltage node (108).

5. The antenna arrangement (100) of any preceding claim further comprising a signal sensor (201) configured to measure a signal at the first antenna (101).

6. The antenna arrangement (100) of claim 5 wherein the signal sensor (201) is an analogue input of a microprocessor configured to measure the signal at the first antenna (101).

7. A Near Field Communications (NFC) device comprising the antenna arrangement (100) of any preceding claim.
